Europäisches Patentamt

European Patent Office

Office européen des brevets

(11) Publication number: **0 051 418**
**B1**

(12) **EUROPEAN PATENT SPECIFICATION**

(45) Date of publication of patent specification: **23.04.86**

(51) Int. Cl.⁴: **H 01 G 4/20, H 01 G 4/18**

(21) Application number: **81305044.0**

(22) Date of filing: **26.10.81**

(54) Capacitor and dielectric.

(30) Priority: **31.10.80 JP 154140/80**

(43) Date of publication of application:
**12.05.82 Bulletin 82/19**

(45) Publication of the grant of the patent:
**23.04.86 Bulletin 86/17**

(84) Designated Contracting States:
**DE FR GB IT NL**

(56) References cited:
**GB-A-1 173 688**

**JAPANESE PATENTS GAZETTE, SECTION CH:
CHEMICAL; week C29, 27th August 1980, page
3, no. 50470, Derwent Publications Ltd.,
London, GB.**

**JAPANESE PATENTS GAZETTE, SECTION CH:
CHEMICAL, week C25, 30th July 1980, page 25,
no. 44410, Derwent Publications Ltd, London,
GB**

(73) Proprietor: **KUREHA KAGAKU KOGYO
KABUSHIKI KAISHA
9-11 Horidome-cho 1-chome Nihonbashi Ch'uo-
ku
Tokyo (JP)**

(72) Inventor: **Sasaki, Tohru
1-86 Kanekodaira Azumada-machi
Iwaki-shi Fukushima-ken (JP)**
Inventor: **Terasaki, Syuuzi
1-9 Kanekodaira Azumada-machi
Iwaki-shi Fukushima-ken (JP)**
Inventor: **Ohta, Mitsuru
7-6 Furukawa Nishiki-machi
Iwaki-shi Fukushima-ken (JP)**
Inventor: **Kakizaki, Shozo
15-2 Sagiuchi Nishiki-machi
Iwaki-shi Fukushima-ken (JP)**

(74) Representative: **Day, Jeremy John et al
REDDIE & GROSE 16 Theobalds Road
London, WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 051 418**

(58) References cited:

JAPANESE PATENTS GAZETTE, SECTION CH:
CHEMICAL, week Y21, 4th July 1977, page 14,
no. 37383, Derwent Publications Ltd., London,
GB.

DERWENT JAPANESE PATENTS REPORT, vol.
74, no. V12, 26th April 1974, Derwent
Publications Ltd., London, GB. "Organic film
capacitor prodn."

DERWENT JAPANESE PATENTS REPORT, vol.
T., no. 08, 28th March 1972, abstract no.
12928T, Derwent Publications Ltd, London, GB.
"Laminated sheet oil"

## Description

The present invention relates to a capacitor in which an oriented synthetic resin film is employed for a dielectric layer.

As polyvinylidene fluoride films have a dielectric constant about three to six times higher than that of other plastic films and are superior in breakdown voltage performance, they may provide a very small capacitor compared with capacitors with conventional dielectrics.

Polyvinylidene fluoride films, however, are as poor as or poorer than other plastic films when it comes to impregnation with an insulating oil or the like so that they cannot utilize their properties fully even where they are employed for capacitors. The polyvinylidene fluoride films can only be slightly penetrated and wetted with an impregnating agent because of the physical and chemical properties of their surface. Even if they are impregnated with an impregnating agent, some portions that are not impregnated with the impregnating agent occur in the film so that corona discharge may occur at a high voltage, whereby the film is deteriorated and, as a result, the insulation of the capacitor is damaged.

In order to improve the poor impregnation of the plastic films for use with capacitors, the prior art technique generally employs a so-called composite dielectric element prepared by superposing the film or films with a sheet or sheets of insulating paper and winding the superposed material in a roll. In the case of polyvinylidene fluoride films, it may be possible to improve the impregnating ability to some extent by forming a composite element with insulating paper. In this case, however, the dielectric constant and the breakdown voltage performance of the insulating paper is considerably lower than that of the polyvinylidene fluoride film so that the use of such composite dielectric elements cannot provide a sufficient effect with respect to reduction of the capacitor size and improvement in breakdown voltage performance.

This invention provides a capacitor that is reduced in size and has an improved breakdown voltage performance.

The present invention also provides a capacitor in which a polyvinylidene fluoride film having a good impregnating ability is employed as the dielectric layer.

In accordance with one aspect of the present invention, there is provided a capacitor in which an at least uniaxially oriented film is employed as the dielectric layer, the film comprising (a) a base layer comprising from 95% to 100% by weight of a vinylidene fluoride resin and (b) a coating layer comprising a mixture of a vinylidene fluoride resin and a polymer substantially incompatible with the mixture of a vinylidene fluoride resin and having a critical surface tension of at least 30 mN/m (30 dyne/cm), the coating layer being disposed on at least one of the surfaces of the base layer.

The capacitors in accordance with the present invention contain a dielectric layer in which an at least uniaxially oriented film comprising of a vinylidene fluoride resin is used as a base layer. A coating layer is laminated on at least one side thereof to the base layer. The term "vinylidene fluoride resin" includes vinylidene fluoride homopolymers and copolymers containing vinylidene fluoride units in an amount of at least approximately 50 mol%. Monomers copolymerizable with the vinylidene fluoride units may include, for example, ethylene trifluoride, ethylene tetrafluoride, propylene hexafluoride, trifluorochloroethylene vinyl fluoride and so on.

In accordance with the present invention, the base layer consisting mainly of vinylidene fluoride resin may contain a small amount, not exceeding approximately 5% by weight, of a different kind of a polymer. Any such polymer may be present provided that it does not adversely affect the performance of the film in a capacitor in accordance with the present invention.

The polymers to be employed in admixture with the vinylidene fluoride resin for the coating layer are thermoplastic resins which are at most slightly compatible with the vinylidene fluoride resin and which have a critical surface tension $\gamma_c$ of 30 mN/m (30 dyne/cm) or higher. Such polymers may include, for example, thermoplastic polyester resins such as polyethylene terephthalate or polybutylene terephthalate, polycarbonates, polystyrenes or the like. Copolymers or mixtures of the polymers and/or copolymers may also be employed.

The critical surface tension $\gamma_c$ is a measure for wettability of a polymer by a liquid. It can generally be said that a material having a low critical surface tension $\gamma_c$ is one which is unlikely to be wetted by a liquid.

Table 1 below illustrates the critical surface tensions of polymers substantially incompatible with the vinylidene fluoride resins. The term "substantially incompatible" and similar expressions is intended herein to mean that an apparent phase separation is recognised when a mixture of a polymer with polyvinylidene fluoride in an amount of at least 1% by weight is fused and then cooled.

# 0 051 418

TABLE 1

| Polymers | Critical surface tension (mN/m) |
|---|---|
| Polyethylene | 31 |
| Polystyrene | 33 |
| Polycarbonate | 42 |
| Polyethylene terephthalate | 43 |

The polymer substantially incompatible with the vinylidene fluoride resin is admixed with the vinylidene fluoride resin. The amount of such polymer to be admixed with the vinylidene fluoride resin may be in the range from approximately 5 to 70% by weight, preferably from approximately 10 to 50% by weight. Where the amount of such polymer is too small, the otherwise improvable impregnating ability and breakdown voltage performance will be impaired; where such amount is too large, a remarkable decrease in the dielectric constant of a laminated film is encountered. The mixing may be carried out in conventional manner, for example, by means of the melt blend method using an extruder.

It is herein to be noted that the vinylidene fluoride resins to be employed in the present invention may contain a small amount of conventional additives, such as heat stabilizers, fillers, voltage stabilizers or the like.

In accordance with the present invention, a composite or laminated film may be prepared by laminating the coating layer on one or both sides of the base layer in conventional manner. A preferred procedure may be the co-extrusion method which involves extruding the base layer comprising from 95% to 100% by weight of the vinylidene fluoride resin and the coating layer consisting essentially of the resin mixture by means of an extruder and integrally laminating the two layers in a die disposed nearby the outlet of the extruder to provide the film. The laminated film thus prepared is then uniaxially or biaxially oriented in conventional manner.

The oriented film to be employed in accordance with the present invention has on its surface or surfaces a finely uneven structure which can serve to permit a favorable wetting with an impregnant such as an insulating oil. Electron microscopic observation reveals that fine polymer particles having a large critical surface tension are exposed on the surface of the oriented film, whereby the wettability of the surface of the otherwise sparingly wettable film of vinylidene fluoride resin is improved.

It will be appreciated that the finely uneven structure on the surface of the oriented film is originally formed at the time of preparation of the unoriented film because of the poor compatibility of the resin mixture employed in the coating layer and subsequently that such structure is enhanced by orientation.

The oriented film to be employed in accordance with the present invention can save a large amount of the resin to be mixed therewith as compared to a film prepared by extruding the resin mixture singly in a sheet form and then orienting the resulting sheet so that the orientability of film is decreased or the film is cut during manufacture. The use of the resin mixture for the coating layer does not adversely affect the dielectric constant and the breakdown voltage performance of the film itself. Accordingly, the oriented film prepared in a manner as described hereinabove is particularly suitable as a dielectric film for the preparation of a capacitor element.

The oriented film is used to provide a capacitor element in accordance with the present invention. The capacitor element may be formed by interposing the oriented film between a pair of electrodes such as aluminum foil and winding the laminated film on itself in a roll. A plurality of oriented films may be employed between a pair of electrodes. Where a plurality of the oriented films are employed, it is not necessarily required that such dielectric film should comprise all of the oriented films. For example, where three dielectric sheets are applied, the resulting capacitor element may be constructed so as to dispose two sheets of the oriented films between the two electrodes and further to interpose between the oriented films an oriented film of a simple composition of polyvinylidene fluoride or an insulating paper sheet. As an alternative to using a metal foil such as aluminum foil as set forth hereinabove as electrodes, for example, a metal film deposited may be deposited on the dielectric, thus providing a metallized film capacitor.

The capacitor element thus prepared is then impregnated *in vacuo* with an impregnating agent such as an insulating oil or the like. The insulating agent may comprise, for example, a mineral insulating oil such as those obtainable from petroleum fractions; a synthetic oil composed of an aromatic hydrocarbon such as an alkylbenzene, alkylnaphthalene, diallylalkane, e.g., diallylethane or the like; a low dielectric material such as silicone oil, polybutene oil or a wax; or a high dielectric material such as castor oil, a phthalic acid ester, a phosphoric acid ester, fluorinated silicone oil or a fluorinated aromatic oil. Such insulating oils may be employed singly or in admixture with the other. A small amount of a stabilizer may also be added thereto.

The following Examples illustrate the invention.

4

## Example 1

Vinylidene fluoride resin "(a vinylidene fluoride homopolymer having an average polymerization degree of 1,100)" was mixed with varying amounts of a polycarbonate and pelletized in an extruder. The mixture melted at 260°C.

The pelletized resin mixture and a vinlylidene fluoride resin separately pelletized were fed to an extruder and extruded at 270°C. to give a laminated sheet. The sheet was oriented in both the widthwise and longitudinal directions so as to increase the area thereof to 12 times its original area. The biaxially oriented sheet had a thickness of 12 microns with a 3 microns thick coating layer on each side.

Using two laminated sheets and a sheet of aluminum foil as one unit, two units were superposed on each other to give a capacitor element which was impregnated with an alkylnaphthalene at 80°C under a vacuo of 1.3 Pa ($10^{-2}$ Torr) to provide a capacitor having a static capacitance of approximately 0.5 μF.

The capacitor was measured for its dielectricity, corona starting voltage and breakdown voltage. The results are shown in Table 1 below.

Dielectric constant (ε) is determined by measuring the static capacitance of a sample capacitor at 20°C and 1 KHz, the area of the capacitor and the thickness of the dielectric material between the electrodes and calculating the measured figures in conventional manner.

The corona starting voltage (V) is determined by measuring the partial discharge incepting voltage at 50 pps and a sensitivity of 10 pc by means of a low frequency partial discharge measuring device (manufactured by Dai-Nippon Densen K.K.).

The breakdown voltage (VDC) is the voltage at which breakdown occurs when a potential difference increasing at a rate of approximately 100 V per second is applied across the terminals of the capacitor.

The performances of capacitors prepared using varying amounts of polycarbonate are shown in Table 2.

## Comparative Example A

A sample capacitor was prepared in similar manner to Example 1 with the exception that an uncoated biaxially oriented vinylidene fluoride resin film having a thickness of 12 microns was employed.

## Comparative Example B

A sample capacitor was prepared in similar manner to Example 1 except that there was employed a biaxially oriented film having a thickness of 12 microns from a homogeneous mixture of vinylidene fluoride resin and polycarbonate in the amount of 20% by weight.

TABLE 2

|  | Amount of polycarbonate (% by wt) | Dielectric constant (ε) | Corona starting voltage (V) | Breakdown voltage (VDC) |
|---|---|---|---|---|
| Example 1 | 5 | 9.1 | 2,300 | 9,800 |
| " | 10 | 8.8 | 2,500 | 10,600 |
| " | 15 | 8.5 | 2,550 | 11,500 |
| " | 30 | 8.2 | 2,500 | 11,300 |
| " | 50 | 7.5 | 2,450 | 10,400 |
| " | 70 | 7.0 | 2,400 | 10,200 |
| Comparative Example A | — | 9.3 | 1,800 | 7,800 |
| Comparative Example B | — | 5.5 | 2,200 | 9,000 |

## Example 2

The procedure of Example 1 were followed with the exception that various polymers were mixed in an amount of 15% by weight with the vinylidene fluoride resin and the resultant biaxially oriented film had on each side a coating layer having a thickness of 2 microns.

Using the film, a capacitor element was prepared in the same manner as in Example 1 and then impregnated with tricresyl phosphate at 80°C, under a vacuo of 1.3 Pa ($10^{-2}$ Torr) to give a capacitor having a static capacitance of 0.5 μF.

# 0 051 418

## TABLE 3

| | Kind of polymer | Dielectric constant ($\varepsilon$) | Corona starting voltage (V) | Breakdown voltage (VDC) |
|---|---|---|---|---|
| Example 2 | Polyethylene terephthalate | 9.5 | 2,500 | 11,300 |
| " | Polystyrene | 9.2 | 2,600 | 12,000 |
| " | Polybutylene terephthalate | 9.4 | 2,550 | 11,800 |
| Comparative Example | Polytetrafluoro-ethylene | 9.0 | 1,700 | 6,500 |

It is apparent from Table 3 that the polymers used in Example 2 can provide superior performance. In the instance where the polytetrafluoroethylene was employed, it is believed that the decrease in both the corona starting voltage and the breakdown voltage is caused by the small critical surface tension $\gamma_c$.

## Claims

1. A capacitor in which the dielectric comprises a uniaxially or biaxially oriented film, the film comprising (a) a base layer comprising from 95% to 100% by weight of a vinylidene fluoride resin; and (b) a coating layer comprising a mixture of the vinylidene fluoride resin and a polymer substantially incompatible with the vinylidene fluoride resin and having a critical surface tension of 30 mN/m (30 dyne/cm) or higher; the coating layer being disposed on at least one side of the base layer.

2. A capacitor as claimed in claim 1, wherein the vinylidene fluoride resin is a homopolymer of vinylidene fluoride or a copolymer thereof with a copolymerizable monomer.

3. A capacitor as claimed in claim 2, wherein the vinylidene fluoride resin is a copolymer of vinylidene fluoride with an alkylene fluoride.

4. A capacitor as claimed in claim 3, wherein the alkylene fluoride is ethylene tetrafluoride, propylene hexafluoride, trifluorochloroethylene, ethylene trifluoride or vinyl fluoride.

5. A capacitor as claimed in any one of claims 1 to 4, wherein said polymer which is substantially incompatible with the vinylidene fluoride resin and has said critical surface tension is a thermoplastic polyester resin, a polycarbonate or polystyrene.

6. A capacitor as claimed in claim 5, wherein the thermoplastic polyester is polyethylene terephthalate or polybutylene terephthalate.

7. A capacitor as claimed in any one of claims 1 to 6, wherein there is in the coating layer approximately 5 to 70% by weight of said polymer.

8. A capacitor as claimed in claim 7, wherein there is in the coating layer approximately 10 to 50% by weight of said polymer.

9. A dielectric comprising a uniaxially or biaxially oriented laminated film, the film comprising (a) a base layer comprising from 95% to 100% by weight of a vinylidene fluoride resin, and (b) a coating layer on one or both sides of the base layer comprising a mixture of vinylidene fluoride resin and a polymer substantially incompatible therewith and having a critical surface tension of at least 30 mN/m (30 dynes/cm).

## Patentansprüche

1. Kodensator, in dem das Dielektrikum einen einachsig oder zweiachsig orientierten Film aufweist, der aufgebaut ist aus (a) einer Grundschicht aus 95 bis 100 Gew.-% eines Vinylidenfluoridharzes und (b) einer Überzugsschicht mit einer Mischung aus einem Vinylidenfluoridharz und einem solchen Polymer, das im wesentlichen unverträglich mit dem Vinylidenfluoridharz ist und mit einer kritischen Oberflächenspannung von 30 mN/m (30 dyn/cm) oder höher, wobei die Überzugsschicht auf mindestens einer Seite der Grundschicht aufgebracht ist.

2. Kondensator nach Anspruch 1, bei dem das Vinylidenfluoridharz ein Homopolymer von Vinylidenfluorid oder ein Copolymer davon mit einem copolymerisierbaren Monomeren ist.

3. Kondensator nach Anspruch 2, bei dem das Vinylidenfluoridharz ein Copolymer von Vinylidenfluorid mit einem Alkylenfluorid ist.

4. Kondensator nach Anspruch 3, bei dem das Alkylenfluorid Ethylentetrafluorid, Propylenhexafluorid, Trifluorochlorethylen, Ethylentrifluorid oder Vinylfluorid ist.

5. Kondensator nach einem der Ansprüche 1 bis 4, bei dem das Polymer, welches im wesentlichen

6

**0 051 418**

unverträglich mit dem Vinylidenfluoridharz ist und die kritische Oberflächenspannung hat, ein thermo-plastisches Polyesterharz, ein Plycarbonat oder Polystyrol ist.

6. Kondensator nach Anspruch 5, bei dem der thermoplastische Polyester Polyethylenterephthalat oder Polybutylenterephthalat ist.

7. Kondensator nach einem der Ansprüche 1 bis 6, bei dem in der Überzugsschicht der Gehalt an dem Polymer etwa 5 bis 70 Gew.-% ist.

8. Kondensator nach Anspruch 7, bei dem in der Überzugsschicht der Gehalt an dem Polymer etwa 10 bis 50 Gew.-% ist.

9. Dielektrikum auf der Basis eines einachsig oder zweiachsig orientierten laminierten Films, wobei der Film aufgebaut ist aus (a) einer Grundschicht aus 95 bis 100 Gew.-% eines Vinylidenfluoridharzes und (b) einer Überzugsschicht auf einer oder beiden Seiten der Grundschicht mit einer Mischung eines Vinylidenfluoridharzes und eines Polymeren, welches mit dem Vinylidenfluoridharz im wesentlichen unverträglich ist und eine kritische Oberflächenspannung von wenigstens 30 mN/m (30 dyn/cm) hat.

**Revendications**

1. Condensateur dans lequel le diélectrique est un film orienté uniaxialement ou biaxialement, le film comprenant (a) une couche de base contenant 95 à 100% en poids d'une résine de fluorure de vinylidène, et (b) une couche de revêtement contenant un mélange de la résine de fluorure de vinylidène et d'un polymère pratiquement incompatible à la résine de fluorure de vinylidène et ayant une tension superficielle critique de 30 mN/m (30 dynes/cm) ou plus, la couche de revêtement étant placée sur une face au moins de la couche de base.

2. Condensateur selon la revendication 1, dans lequel la résine de fluorure de vinylidène est un homopolymère de fluorure de vinylidène ou un copolymère de celui-ci avec un monomère copolymérisable.

3. Condensator selon la revendication 2, dans lequel la résine de fluorure de vinylidène est un copolymère de fluorure de vinylidène avec un fluorure d'alkylène.

4. Condensateur selon la revendication 3, dans lequel le fluorure d'alkylène est le tétrafluorure d'éthylène, l'hexafluorure de propylène, le trifluorochloréthylène, le trifluorure d'éthylène ou le fluorure de vinyle.

5. Condensateur selon l'une quelconque des revendications 1 à 4, dans lequel le polymère qui est pratiquement incompatible a la résine de fluorure de vinylidène et à la tension superficielle critique est une résine polyester thermoplastique, un polycarbonate ou un polystyrène.

6. Condensateur selon la revendication 5, dans lequel le polyester thermoplastique est le téréphtalate de polyéthylène ou de polybutylène.

7. Condensateur selon l'une quelconque des revendications 1 à 6, dans lequel 5 à 70% environ en poids du polymère sont incorporés à la couche de revêtement.

8. Condensateur selon la revendication 7, dans lequel 10 à 50% environ en poids du polymère sont incorporés à la couche de revêtement.

9. Diélectrique comprenant un film stratifié orienté uniaxialement ou biaxialement, le film comprenant (a) une couche de base ayant 95 à 100% en poids d'une résine de fluorure de vinylidène, et (b) une couche de revêtement formée sur une face de la couche de base ou sur les deux faces et comprenant un mélange d'une résine de fluorure de vinylidène et d'un polymère pratiquement incompatible avec elle et ayant une tension superficielle critique au moins égale à 30 mN/m (30 dynes/cm).